# EUROPEAN PATENT APPLICATION

(11) **EP 4 578 893 A1**
(43) Date of publication of application: **02.07.2025**
(21) Application number: 23220727.4
(22) Date of filing: 29.12.2023
(51) Int. Cl.: C08G 77/04, C08G 77/20, C08K 3/04, C08K 3/08, C08K 3/36, C08K 5/14, C08K 13/02, C09D 183/04

(54) **ELASTOMERIC COMPOSITION FOR THE MANUFACTURE OF HEAT TRANSFER EMBOSSING DIES**

(71) Applicant: Stamp Systems Sp. z o.o., 62 080 Sady (PL)
(72) Inventor: Bula, Karol, 63 004 Tulce (PL); Kaczmarek, Olga, 61 445 Poznan (PL); Wasiuta, Andrzej, 61 445 Poznan (PL); Rudziakowicz, Marcin, 60 185 Skorzewo (PL)
(74) Representative: Kondrat, Mariusz

(57) **Abstract**

The object of the invention is an elastomeric composition for the manufacture of heat transfer embossing dies, comprising a polymer matrix in the form of an organosilicone rubber, a thermally conductive filler, an inorganic reinforcing filler, an organic reinforcing filler, and a crosslinking agent, characterized in that it comprises an organosilicone rubber; a thermally conductive substance in the form of metallic particles in an amount of 75 - 200 parts by weight per 100 parts by weight of rubber, an organic reinforcing filler in the form of two species of carbon black particles in an amount of 10 - 100 parts by weight, whereby the ratio by weight of the first carbon black species to the second carbon black species is 2:3 by weight, and in addition are carbon black particles with an iodine number of 50 to 150 g/kg and technical carbon black particles with an iodine number of 10 to 49 g/kg; an inorganic reinforcing filler in the amount of 5 - 100 parts by weight per 100 parts by weight of rubber; and a crosslinking agent in the amount of 0.1 - 5 parts by weight per 100 parts by weight of rubber.

## Description

The object of the invention is an elastomeric composition for the manufacture of dies for stamping by the method of
thermal transfer.

Elastomeric composition according to the invention for thermal marking with increased heat transmission, very high hardness and increased abrasion resistance for the thermal transfer of films, including the so-called "round" printing method and the method of
"top-down", on plastic and glass details.

Polymeric materials are referred to as insulating materials with a low thermal conductivity coefficient λ [W/m x K]. One method of increasing thermal conductivity is to introduce fillers into the polymer matrix, usually with a very high λ coefficient; these include aluminium nitride, boron nitride, lamellar graphite, carbon fibres, carbon nanotubes, graphene, mica, pure metals, metallic oxides and metal alloy particles. The effectiveness of the method was confirmed for a polyamide 66 composite with 30 wt% graphite (average graphite grain diameter 45 µm), and an increase in thermal conductivity from a value of 0.34 to a value of 1.0 [W/m x K] was obtained (Lakshmi Srinivas Ch. et al.; An Investigation on Thermal Conductivity of Graphite Filled PA66 Composites; Procedia Engineering, vol. 127 (2015)). Similar results were obtained for an elastomeric composition based on styrene-butadiene rubber, where the filler was boron nitride (average grain diameter 45 µm), with a proportion of 90% by weight, a lambda coefficient of 0.66 [W/m x K] was obtained; (Zhang Y. et al.; Improved thermal conductivity and mechanical property of mercapto group-activated boron nitride/elastomer composites for thermal management; Composites Part A, vol. 156 (2022)). A different concept was applied to composites based on methylvinylsilicone rubber, where lamellar graphite (average lamella length 87 µm, lamella thickness in the range up to 1.25 to 2 µm) was used as a precursor for thermal conductivity, the particles of which were oriented in the rubber sheet. The test specimen was formed by stacking the plates in layers, resulting in a λ-factor of 13.93 [W/m x K] in the direction of the orientation of the graphite plates for a proportion of 66 wt% graphite. However, these composites exhibit strongly anisotropic properties (Zhang R. et al., A scalable highly thermally conductive silicone rubber composite with orientated graphite by pre-vulcanising and multilayer stacking method; Composites Part A vol. 157 (2022)). A different approach to increasing the thermal conductivity of methylvinyl silicone rubbers was characterised by a research paper (Wen Qi et al.; Promoting the thermal transport via understanding the intrinsic relations between thermal conductivity and interfacial contact probability in the polymeric composites with hybrid fillers; Composites Part B vol. 232 (2022)), in which aluminium dioxide (Al₂O₃) ₎ and silicon carbide (SiC) particles were used, and variable weight proportions of these adducts were applied. An increase in λ from 0.2 to 0.5 [W/m x K] was achieved for a composition containing a volume ratio of adducts of 1:4. The composite exploited the effect of mutual packing of thermally conductive fillers in the matrix and the transfer of heat flux through mutual contact between adjacent grains. A comparable study in this regard was carried out for a set of 3 fillers: aluminium dioxide, aluminium nitride (AIN) and boron nitride (BN) (Yu-Tong Li et al.; Processing, thermal conductivity and flame retardant properties of silicone rubber filled with different geometries of thermally conductive fillers: A comparative study; Composites Part B vol. 238 (2022)), as well as in a paper (Jianjun Zheng et al.; Performance of Silicone Rubber Composites Filled with Aluminum Nitride and Alumina Tri-Hydrate; Materials, vol. 13, 2489 (2020)). An additional aspect of the use of thermally conductive fillers characterised by different boron nitride grain sizes (two grain size fractions: 30 µm and 120 µm) is presented in study (Xuejun Zhou et al.; Enhancing thermal conductivity of silicone rubber via constructing hybrid spherical boron nitride thermal network; Journal of Applied Polymer Science vol. 139, (2022)). The authors demonstrated that the cross flow of the heat flux will be intensified if the packing ratio of the fillers, understood as the space occupation between large boron nitride grains (120 µm) by smaller grains (30 µm), is increased. The proportions of the weight shares were advantageously set at 8:2 by weight, according to the adducts indicated. This resulted in an increase in the lambda coefficient of the composition from 0.2 to 1.41 [W/m x K].

The solution claimed in patent PL 191217 claims the construction of an embossing die consisting of an unspecified substrate and an elastomeric coating containing a silicone or fluorine elastomer.

In the claimed solutions for methods of decoration by thermal transfer, there is a patent description PL/EP 3736139, which claims the die as an aluminium plate coated with silicone rubber on the outer side for direct contact with the film. However, there is no mention of the silicone rubber composition claim in the stated description.

The disclosed patent descriptions include solutions for the composition of polymeric material blends referred to as thermally conductive composites or composites with increased thermal conductivity. Patent description WO20190797471A1 includes a description of a composition for a composite comprising thermally conductive inorganic and/or organic fillers of between 20% and 80% by weight in the matrix, with the additional claim that the matrix may be a thermoplastic elastomer capable of being processed by additive methods. Another patent publication WO2019035730A1 claims a proportion of dispersion fillers with a range of primary particles from
50 nm to 250 µm and fibrous fillers from 8 µm to 250 µm in a polymer matrix defined as high molecular weight materials, where the proportion of fillers in total is in the range of 40% to 60% by weight. In addition, the solution claims a manufacturing method limited only to mixers and closed-chamber mixing systems. The description of a further patent application shows that metallic particles embedded in an organoalkoxysilane gel are used to produce a conductive composite. In WO2019016322A1, no organic carbon black content is included, only carbon fibres and graphite. According to the content of the description of WO2019016322A1, an increase in the thermal conductivity of polypropylene was obtained using different types of black carbon species, subjected to a graphitisation process in the temperature range from 1600°C to 3500°C, obtaining the crystalline structure of carbon compounds. A very wide range of polymeric materials are described, including silicone rubbers and other thermally conductive fillers, excluding pure metals.

The solutions described above do not indicate the existence of an elastomeric composition with complex material properties.

The aim of the invention is to prepare an elastomer composition with complex material properties such as thermal conductivity, hardness, reduced matrix abrasion, resistance to permanent deformation.

The essence of the invention is an elastomeric composition for heat transfer embossing dies, comprising a polymer matrix in the form of an organosilicone rubber, a thermally conductive filler, an inorganic reinforcing filler, an organic reinforcing filler, and a crosslinking agent, characterized in that it comprises an organosilicone rubber a thermally conductive substance in the form of metallic particles in an amount of 75 - 200 parts by weight per 100 parts by weight of rubber, an organic reinforcing filler in the form of two species of carbon black particles in an amount of 10 - 100 parts by weight, whereby the ratio by weight of the first carbon black species to the second carbon black species is 2:3 by weight, and in addition are carbon black particles with an iodine number of 50 to 150 g/kg and technical carbon black particles with an iodine number of 10 to 49 g/kg; an inorganic reinforcing filler in the amount of 5 - 100 parts by weight per 100 parts by weight of rubber; and a crosslinking agent in the amount of 0.1 - 5 parts by weight per 100 parts by weight of rubber.

Advantageously, a methylvinylsilicone rubber with a content of
vinyl groups from 0.03 to 1.1 g/mol.

Advantageously, the metallic particles are copper particles with a content of min. 98,5%
by weight; with a grain size in the range 0.02 µm - 60 µm.

Advantageously, the organic reinforcing filler consists of carbon black particles with an iodine number of
81 g/kg in combination with technical carbon black particles with an iodine number of 37.5 g/kg.

Advantageously, the inorganic reinforcing filler is pyrogenic and/or precipitated silicon dioxide with a specific surface area in the range of 130 to 360 m² /g.

Advantageously, 2,5-bis(tert-butylperoxy)-2,5-dimethyl hexane is used as a crosslinking agent
in the form of a paste with 40-55% silicone oil.

The object of the invention is the composition of an elastomeric composition comprising a polymer matrix in the form of a silicone rubber, a dispersed phase with high thermal conductivity particles in the form of copper grains and, according to the invention, a dispersed reinforcing phase comprising: a dispersed inorganic filler - amorphous silicon dioxide with a specific surface area in the range 130 - 360 m² /g, which can be occured as a pyrogenic compound or obtained by a precipitation reaction, and a dispersion phase of organic fillers in the form of carbon black particles, according to the invention, characterised in that one of the carbon blacks exhibits a surface development described by an iodine number, while the other carbon black species exhibits a surface development of half the size, according to the invention the weight ratio of the first carbon black species to the second carbon black species is 2:3 by weight. The elastomeric composition comprises a silicon-organic methylvinylsilicone rubber, copper metallic particles in an amount of 75 - 200 parts by weight per 100 parts by weight of the rubber, silicon dioxide in an amount of 5 - 50 parts by weight per 100 parts by weight of the rubber, carbon black with an iodine number of 81 g/kg and carbon black with an iodine number of 37.5 g/kg in a total amount of 10 - 80 parts by weight per 100 parts by weight of the rubber. The elastomer composition contains additionally, as crosslinking agent, 2,5-bis(tert-butylperoxy)-2,5-dimethyl hexane, (paste), used in an amount of 0,1 - 5 parts by weight per 100 parts by weight of rubber.

The invention is illustrated in the following performance examples.

The mixtures were processed in a rolling mill to obtain a homogeneous product, then slabbed and vulcanised at 175 °C for 15 minutes.

### Example 1 Elastomeric composition No. 1

Methylvinylsilicone rubber - 100 parts by weight
Cross-linker 2,5-bis(tert-butylperoxy)-2,5-dimethyl hexane, (paste) - 0.5 parts by weight
Copper particles in the range 2.8 µm - 60 µm - 150 parts by weight
Carbon black of 81 g/kg -16 parts by weight
Carbon black of 37,5 g/kg - 20 parts by weight

### Example 2 Elastomeric composition No. 2

The elastomeric compositions were prepared in an open mixer-rolling mill.
Methylvinylsilicone rubber - 100 parts by weight
Cross-linker 2,5-bis(tert-butylperoxy)-2,5-dimethyl hexane, (paste) - 0.5 parts by weight
Copper particles in the range 0.02 µm - 60 µm - 110 parts by weight
Carbon black with an iodine number of 81 g/kg -16 parts by weight
Carbon black with an iodine number of 37,5 g/kg - 20 parts by weight

### Example 3

### Elastomeric composition No. 3

Methylvinylsilicone rubber - 100 parts by weight
Cross-linker 2,5-bis(tert-butylperoxy)-2,5-dimethyl hexane, (paste) - 0.1 parts by weight
Copper particles in the range 2.8 µm - 60 µm - 75 parts by weight
Carbon black with an iodine number of 50 g/kg - 60 parts byweight
Carbon black with an iodine number of 49 g/kg - 20 parts by
weight
Precipitated silicon dioxide - 50 parts by weight

### Example 4

### Elastomeric composition No. 4

Methylvinylsilicone rubber - 100 parts by weight
Cross-linker 2,5-bis(tert-butylperoxy)-2,5-dimethyl hexane, (paste) - 5 parts by weight
weights
Copper particles in the range 0.02 µm - 60 µm - 200 parts by weight
Carbon black with an iodine number of 150 g/kg -10 parts by weight
Carbon black with an iodine number of 10 g/kg - 20 parts by weight
Pyrogenic silicon dioxide - 5 parts by weight

### Example 5

The results of a comparative study of elastomeric compositions with unmodified rubber were included in in Table 1.

**Table 1. Selected mechanical and thermal permeability properties of the compositions tested elastomeric**

| Composition | Hardness Shore A | Thermal conductivity coefficient | Abrasion resistance | Static load 100 kPa w 250 °C. for 30 minutes |
|---|---|---|---|---|
| | [Sh A] | [W/m x K] | [mm ]³ | |
| Methylvinylsilicone rubber | | | | |
| Substance cross-linker, | 70 ± 1 | 0,223± 0,001 | 2302± 63 | Defective matrix |
| pyrogenic silica | | | | |
| Elastomer composition No. 1 | 93 ± 1 | 0,620± 0,001 | 1487± 51 | Undamaged matrix |
| Elastomer composition No. 2 | 93 ± 1 | 0,490± 0,002 | 1286± 17 | Undamaged matrix |

The composition according to the invention provides a number of benefits, which are as follows:
- increased thermal permeability of the mixture according to of the invention will reduce the energy intensity of the hot-stamping process;
- increasing the durability and performance of hot-stamping dies;
- the possibility of using induction heating technology in the hot-stamping process;

## Claims

1. An elastomeric composition for the manufacture of heat transfer embossing dies, comprising a polymer matrix in the form of an organosilicone rubber, a thermally conductive filler, an inorganic reinforcing filler, an organic reinforcing filler, and a crosslinking agent, **characterised by** containing an organosilicone rubber; a thermally conductive substance in the form of metallic particles in an amount of 75 - 200 parts by weight per 100 parts by weight of rubber, an organic reinforcing filler in the form of two species of carbon black particles in an amount of 10 -100 parts by weight, whereby the ratio by weight of the first carbon black species to the second carbon black species is 2:3 by weight, and in addition are carbon black particles with an iodine number of 50 to 150 g/kg and technical carbon black particles with an iodine number of 10 to 49 g/kg; an inorganic reinforcing filler in the amount of 5 - 100 parts by weight per 100 parts by weight of rubber; and a crosslinking agent in the amount of 0.1 - 5 parts by weight per 100 parts by weight of rubber.

2. The elastomeric composition according to claim. 1, **characterised by** the fact that, as an organosilicone rubber, a methylvinylsilicone rubber with a vinyl group content of 0.03 to 1.1 g/mol is used.

3. The elastomeric composition according to claim. 1, **characterised in that** the metallic particles are copper particles, with a content of the main element of min. 98.5% by weight; with a grain size in the range 0.02 - 60 µm.

4. Elastomeric composition according to claim. 1, **characterised in that** the organic reinforcing filler consists of carbon black particles with an iodine number of 81 g/kg in combination with technical carbon black particles with an iodine number of 37.5 g/kg.

5. The elastomeric composition according to claim. 1, **characterised in that** the inorganic reinforcing filler consists of pyrogenic and/or precipitated silicon dioxide with a specific surface area in the range of 130 to 360 m /g.²

6. The elastomeric composition according to claim. 1, **characterised in that** 2,5-bis(tert-butylperoxy)-2,5-dimethyl hexane in the form of a paste with 40-55% silicone oil is used as a crosslinking agent.
